# EUROPEAN PATENT APPLICATION

(11) **EP 4 597 074 A1**
(43) Date of publication of application: **06.08.2025**
(21) Application number: 24166651.0
(22) Date of filing: 27.03.2024
(51) Int. Cl.: G01N 21/01, G01N 21/25, G01N 21/90, G01N 21/03

(54) **FIXTURE FOR SPECTROPHOTOMETER**

(30) Priority: 30.01.2024 US 202463626802 P
(71) Applicant: Nix Sensor Ltd., Hamilton, ON L8L 6A1 (CA)
(72) Inventor: SHERIDAN, Matthew, Hamilton, L8L 6A1 (CA)
(74) Representative: Grund, Martin

(57) **Abstract**

Apparatus for use with a scanner and an object is disclosed. The scanner is of the type that has a base having an aperture, the base, in use, being placed upon the surface of an item to be scanned, the aperture, in use, being in scanning range of the surface of the item to be scanned. The apparatus comprises: an element having a bore which is adapted to receive, and in use receives, the object, the element having a socket, the socket having an aperture which communicates with the bore, the socket being adapted to receive, and which in use receives, the base of the scanner in a manner which and aligns the aperture of the base with the aperture of the socket and presents the aperture of the scanner within scanning range of the object.

## Description

### FIELD

The invention relates to the field of spectrophotometry.

### BACKGROUND

In the manufacture of beverages, it is often desirable for the cans to be printed according to exacting specifications, including color. This can be done with spectrophotometry tools, but because the cans are typically scanned without their tops, they are fairly flimsy and it can be difficult to collect consistent measurements.

### SUMMARY OF THE INVENTION

Forming one aspect of the invention is apparatus for use with a scanner and an object, the scanner being of the type that has a base having an aperture, the base, in use, being placed upon the surface of an item to be scanned, the aperture, in use, being in scanning range of the surface of the item to be scanned, the apparatus comprising:
an element having a bore which is adapted to receive, and in use receives, the object, the element having a socket, the socket having an aperture which communicates with the bore, the socket being adapted to receive, and which in use receives, the base of the scanner in a manner which and aligns the aperture of the base with the aperture of the socket and presents the aperture of the scanner within scanning range of the object.

According to another aspect, the apparatus can further comprise a die having an operative position at which the bore receives the die in a clearance fit.

According to another aspect, the bore can be substantially cylindrical and adapted to receive an aluminum can in a transition fit; and the tolerance of the clearance fit can be the thickness of the can. According to another aspect, each of the element and the die can have a flat surface, the flat surface of the element having the aperture defined therein.

According to another aspect, the die and the element can be magnetically attracted to one another with a force sufficient to, in use, deform the can in the area between the flat surfaces of the die and element.

According to another aspect, the socket can be adapted to receive, and can in use receive, the base of the scanner in a manner which resists rotation of the scanner.

Advantages, features and characteristics of the present invention will become apparent upon a review of the following detailed description, with reference to the appended drawings, the latter being briefly described hereinafter.

### BRIEF DESCRIPTION OF THE DRAWINGS

FIG. 1 is a fixture according to an example of the invention;
FIG. 2 is a die according to an example of the invention;
FIG. 2A is an enlarged view of a portion of the fixture;

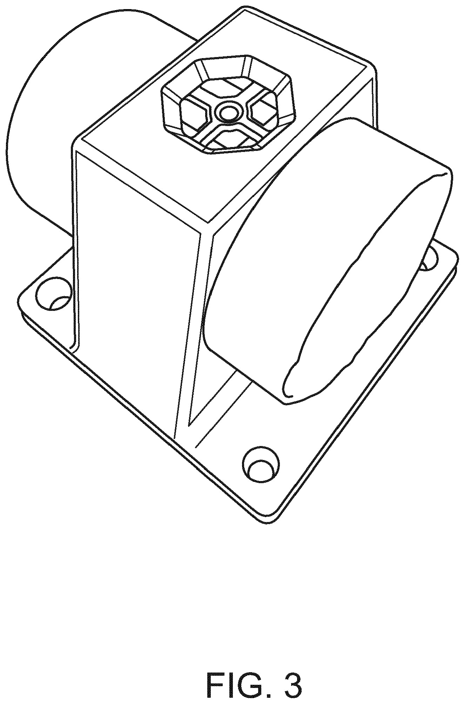

FIG. 3 is a view of the fixture and die of FIG. 1 and 2 in use with a can pre-form;
FIG. 4 is a view of the structure of FIG. 3 from another vantage point;
FIG. 5 is a view of the structure of FIG. 4 about to receive a NIX SPECTRO 2 spectrophotometer; and

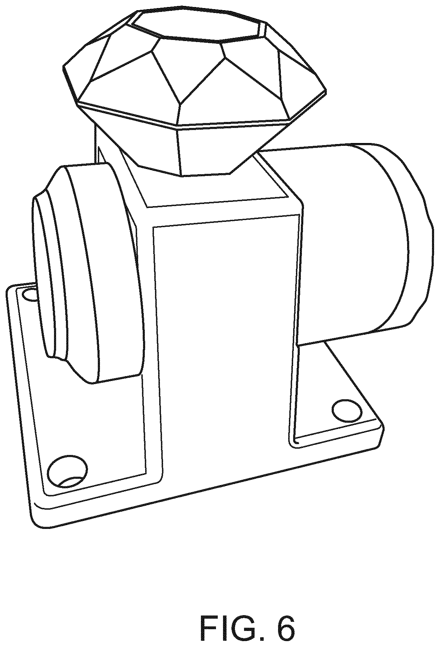

FIG. 6 is a view of the structure of FIG. from another vantage point.

### DETAILED DESCRIPTION

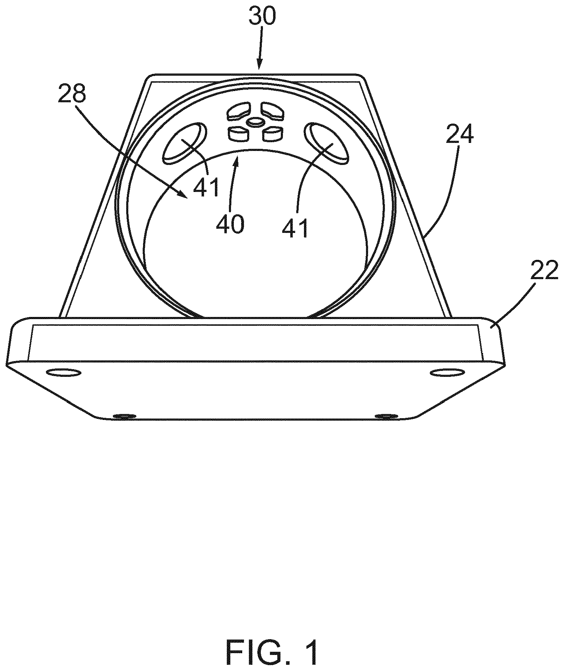

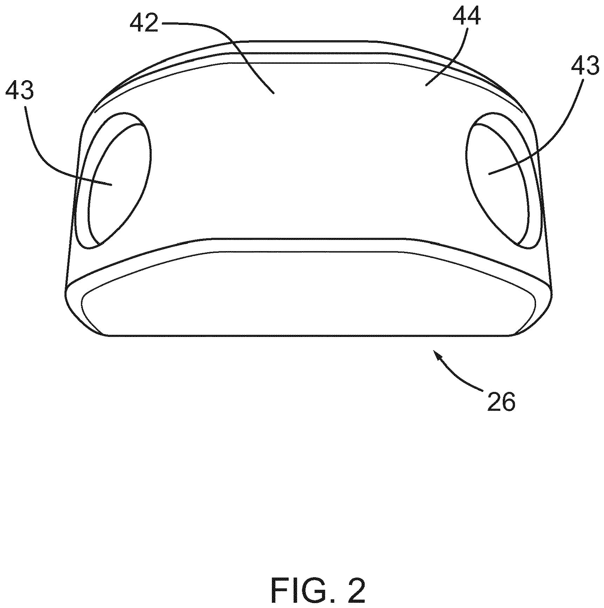

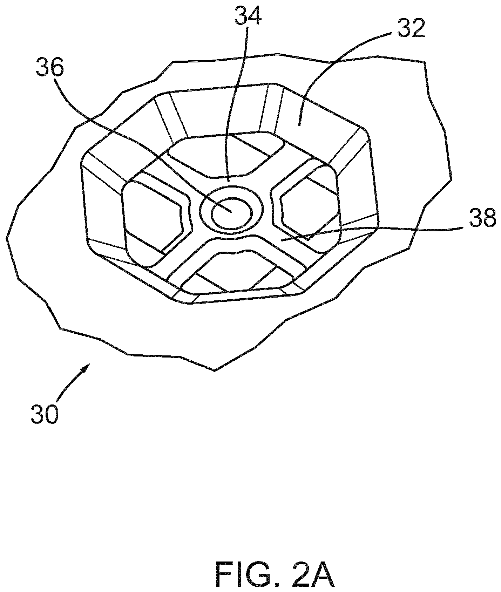

An example of the invention is shown in FIG. 1 and FIG. 2 and will be seen to include a foot 22, an element 24 and a die 26.

The foot 22 is a rectangular plastic component adapted to be mounted to a table or counter by screws via four throughpassing bores.

The element has a substantially cylindrical bore 28 and, exteriorly, a socket 30. With reference to FIG. 2A, the socket has a perimeter wall 32 that is in the form of a truncated regular octagonal pyramid which is narrowest adjacent the bore; an annular center piece 34 in which an aperture 36 is defined and which is disposed in spaced relation to the perimeter wall and adjacent the bore; and four webs 38 extending in cruciform relation from the center piece and connecting the center piece to the perimeter wall. The socket defines interiorly, a flat surface 40 that interrupts the otherwise cylindrical surface of the bore. The element is substantially constructed of plastic but has metal portions 41 overmolded therein.

The die has a flat surface 42 that interrupts an otherwise arcuate surface 44 and is substantially constructed of plastic but has ferromagnetic portions 43 over-molded therein.

In this example, the invention is used with an aluminum can preform (i.e. a can before the top has been installed) and a NIX SPECTRO 2^{™} spectrophotometer.

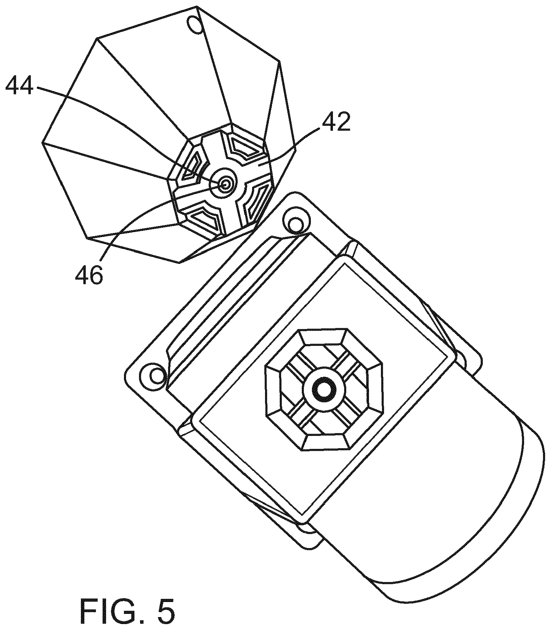

This spectrophotometer will be seen in FIG. 5 to have a portion in the form of a truncated octagonal pyramid, the shape of such pyramid being interrupted by a cruciform groove 42 defined in the truncated surface and an annular boss 44 at the base of the groove in which the aperture 46 is defined.

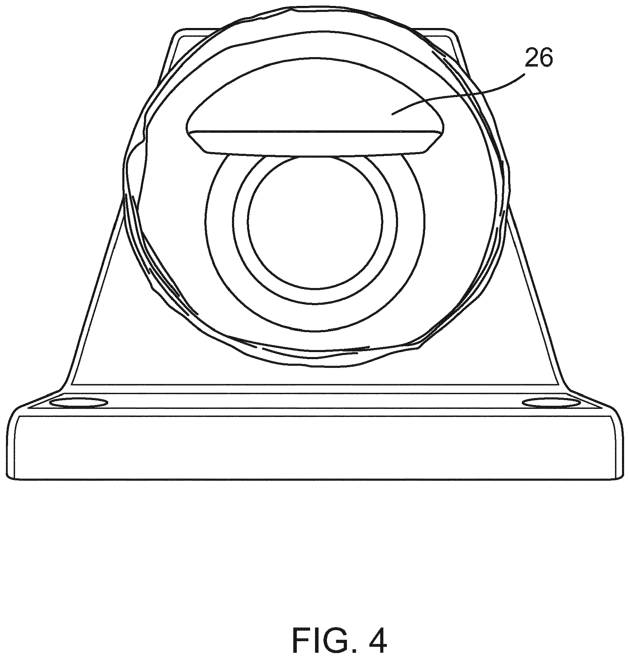

In use:
- the bore receives the aluminum can in a transition fit; the transition fit allows for the position to be adjusted such that, for example, a specific part of the image can be sighted within the aperture of the socket;
- once the can is suitably positioned, the die is placed interiorly of the can, as indicated in FIG. 4, whereupon the magnetic attraction between the die and the element flatten the can such that the bore receives the die in a clearance fit, the tolerance thereof being the thickness of the can (the magnetic attraction still allowing for minor adjustments in position to be made, if, for example, the can was jostled as the die was inserted); and
- with the can now suitably positioned, secured in place and flattened against the aperture by the die, the spectrophotometer is placed in the socket, as indicated by FIGS., 5, 6: the socket receives the base of spectrophotometer in a manner which resists rotation of the scanner, which aligns the aperture of the base with the aperture of the socket and presents the aperture of the scanner within scanning range of the object.

The invention permits consistent measurements to be taken of flimsy cans/can preforms without extensive set up and at relatively low cost.

Notably, the crosshair sight and the corresponding cutout on the spectrophotometer device are set up so the height and the measurement plane are always the same, with and without the adaptor. This provides consistency measuring both flat surfaces (or in this case, flat aluminum can master samples) and cans in the round.

Whereas a specific invention is herein described, variations are possible. Accordingly, the invention should be limited only by the accompanying claims, purposively construed.

## Claims

1. Apparatus for use with a scanner and an object, the scanner being of the type that has a base having an aperture, the base, in use, being placed upon the surface of an item to be scanned, the aperture, in use, being in scanning range of the surface of the item to be scanned, the apparatus comprising:
an element having a bore which is adapted to receive, and in use receives, the object, the element having a socket, the socket having an aperture which communicates with the bore, the socket being adapted to receive, and which in use receives, the base of the scanner in a manner which and aligns the aperture of the base with the aperture of the socket and presents the aperture of the scanner within scanning range of the object.

2. Apparatus according to claim 1 further comprising a die having an operative position at which the bore receives the die in a clearance fit.

3. Apparatus according to claim 2, wherein: the bore is substantially cylindrical and is adapted to receive an aluminum can in a transition fit; and the tolerance of the clearance fit is the thickness of the can.

4. Apparatus according to claim 3, wherein each of the element and the die has a flat surface, the flat surface of the element having the aperture defined therein.

5. Apparatus according to claim 4, where the die and the element are magnetically attracted to one another with a force sufficient to, in use, deform the can in the area between the flat surfaces of the die and element.

6. Apparatus according to claim 1, wherein the socket is adapted to receive, and which in use receives, the base of the scanner in a manner which resists rotation of the scanner.
